# EUROPÄISCHE PATENTSCHRIFT

(11) **EP 1 526 986 B1**
(45) Veröffentlichungstag und Bekanntmachung des Hinweises auf die Patenterteilung: **23.04.2008**
(21) Anmeldenummer: 03711831.2
(22) Anmeldetag: 20.02.2003
(51) Int. Cl.: B60R 21/017

(54) **AIRBAGSTEUERGERÄT FÜR EIN FAHRZEUG**
AIRBAG-CONTROLLER FOR A VEHICLE
APPAREIL DE COMMANDE D'AIRBAG POUR VEHICULE

(30) Priorität: 01.08.2002 DE 10235162
(43) Veröffentlichungstag der Anmeldung: 04.05.2005
(73) Patentinhaber: ROBERT BOSCH GMBH, 70442 Stuttgart (DE)
(72) Erfinder: HENNE, Ralf, 74343 Sachsenheim (DE); HENNE, Achim, 74343 Sachsenheim (DE)
(86) Internationale Anmeldenummer: PCT/DE2003/000525
(87) Internationale Veröffentlichungsnummer: WO 2004/016472

(56) Entgegenhaltungen:
- EP-A- 1 084 910
- DE-A- 3 228 623
- DE-A- 10 103 280
- DE-A- 19 814 589
- DE-A- 19 829 730
- US-A- 5 906 392

## Beschreibung

### Stand der Technik

Die Erfindung geht aus von einem Airbagsteuergerät für ein Fahrzeug nach der Gattung des unabhängigen Patentanspruchs.

Aus DE 198 29 730 A1 , als nächstliegenden Stand der Technik betrachtet, ist es bekannt, zwischen einer Elektronik im Lenkrad und im übrigen Fahrzeug eine Übertragungsstrecke vorzusehen, die sowohl zur Energie- und Datenübertragung konfiguriert ist und sich dabei Transformatoren bedient.

### Vorteile der Erfindung

Das erfindungsgemäße Airbagsteuergerät für ein Fahrzeug mit den Merkmalen des unabhängigen Patentanspruchs hat den Vorteil, dass durch die Entkopplung von relevanten Komponenten in einem Airbagsteuergerät vom Bordnetz Fehlerfälle wie beispielsweise ein Kurzschluss der Minusendstufe der Zündkreisansteuerung zur Fahrzeugmasse oder ein Kurzschluss der Plusendstufe zur Fahrzeugmasse zu einem unbeabsichtigten Zünden von Rückhaltemitteln führen können. Dies hängt daran, dass in einem solchen Fehlerfall im erfindungsgemäßen Steuergerät kein unbeabsichtigter Stromfluss über das Zündelement, also beispielsweise eine Zündpille, führen kann.

Insbesondere ist es von Vorteil, dass der Widerstandswert zwischen einer Leiterplattenmasse im Steuergerät und der Fahrzeugmasse unkritisch ist, was besonders wichtig bei Fahrzeugen mit einem Aluminium-Chassis ist, die bauartbedingt höhere Widerstandswerte aufweisen. Zudem ist es bei diesem Material durch die bedeutsame Oxidschichtbildung schwierig, über die gesamte Fahrzeuglebensdauer die sehr niederohmige Verbindung zu garantieren, welche ohne die Erfindung notwendig ist.

Weiterhin ist es möglich, durch die galvanische Trennung bei den ICs, die mit der galvanisch getrennten Versorgungsspannung gespeist werden, auch bei großen Bordnetzspannungen, beispielsweise bei einem 42-V-Bordnetz, die kostengünstigen 40-V-Herstellungsprozesse beibehalten zu können. Es ist daher nicht notwendig, auf teurere Prozesse mit höheren Spannungen umzustellen, da das Bordnetz keinen Bezug zu internen Versorgungsspannungen hat. Hierbei kann insbesondere beim Zünd-IC, also der Zündkreisansteuerung, Fläche bei den Endstufen-Transistoren eingespart werden, da diese nicht mehr gegen die hohe Bordnetzspannung kurzschlussfest sein müssen. Weiterhin ist es von Vorteil, dass durch die galvanische Trennung im Fehlerfall des Kurzschlusses der Plusendstufe zur Fahrzeugmasse weiterhin die Zündpille im normalen Auslösefall gezündet werden kann, da die Spannung an der Plusendstufe nicht mehr kurzgeschlossen wird.

Es ist vorteilhaft, dass die galvanische Trennung in dem Wandler, der zur Energieversorgung des Steuergeräts dient, durch einen Transformator realisiert wird, wobei primärseitig ein Gleichspannungs-/Wechselspannungswandler und sekundärseitig ein Gleichrichter vorgesehen sind. Im Fahrzeug wird durch die Batterie ein Gleichstrom bereitgestellt, daher ist der Gleichspannungs-/Wechselspannungswandler notwendig, um die Energie über den Transformator zu übertragen. Da die sekundärseitig angeordneten Komponenten im Steuergerät eine Gleichspannung benötigen, ist daher sekundärseitig ein Gleichrichter vorgesehen. Der Gleich-/Wechselspannungswandler kann als Oszillator oder als ein Zerhacker ausgebildet sein.

Darüber hinaus ist es von Vorteil, dass das Koppelglied, das zur Datenübertragung von externen peripheren Komponenten zur Steuergeräteelektronik bzw. zur Zündkreisansteuerung dient, als Optokoppler ausgebildet ist, um auch hier die galvanische Trennung bei der Datenübertragung zu gewährleisten.

Durch die in den abhängigen Ansprüchen aufgeführten Maßnahmen und Weiterbildungen sind vorteilhafte Verbesserungen des im unabhängigen Patentanspruch angegebenen Airbagsteuergeräts für ein Fahrzeug möglich.

Darüber hinaus ist es von Vorteil, dass der Wandler mit wenigstens einem Energiespeicher verbunden ist, vorzugsweise einem Kondensator, der bei einem Abriss der Energieversorgung, also der Fahrzeugbatterie, den Wandler weiterhin betreibt und zwar für eine vorgegebene Zeit. Dies gewährleistet insbesondere bei einer Unfallsituation einen kurzfristigen Betrieb des Airbagsteuergeräts.

Als die mit der galvanischen Trennung geschützten Komponenten im Steuergerät ist entweder die gesamte Steuergeräteelektronik, also insbesondere der Prozessor, oder auch nur die Zündkreisansteuerung vorzusehen.

### Zeichnung

Ausführungsbeispiele der Erfindung sind in der Zeichnung dargestellt und werden in der nachfolgenden Beschreibung näher erläutert. Es zeigen Figur 1 ein erstes Ausführungsbeispiel der Erfindung, Figur 2 ein zweites Ausführungsbeispiel der Erfindung und Figur 3 ein Blockschaltbild des Wandlers.

### Beschreibung

Bei den heute üblichen Airbag-Steuergeräten wird die Masseverbindung zur Steuergeräteversorgung entweder über eine separate Masseleitung oder durch eine leitende Verbindung der Leiterplattenmasse mit dem metallischen Steuergerätegehäuse, welches leitend mit der Fahrzeugmasse verbunden ist, hergestellt. Bei beiden Verfahren ist eine möglichst niederohmige Verbindung notwendig, um unterschiedliche Potenziale der Leiterplattenmasse bezogen auf die Fahrzeugmasse zu vermeiden. Dabei ist insbesondere der Widerstand der separaten Masseleitung bzw. Übergangswiderstand des metallischen Steuergerätegehäuses zur Fahrzeugmasse zu beachten.

Wenn kein Fehlerfall vorliegt, also kein Kurzschluss der Minusendstufe zur Fahrzeugmasse, kein Kurzschluss der Plusendstufe zur Fahrzeugmasse oder eine Unterbrechung der Verbindung zur Fahrzeugmasse, ergibt sich der nachfolgend beschriebene Einschaltvorgang:

Beim Schließen des Zündschlossschalters wird der Einschaltstrom des AirbagSteuergeräts durch die Widerstände der Zuleitung und Vorsicherung des Vorwiderstands auf der Leiterplatte zur Begrenzung des Ladestroms und des Widerstands der separaten Masseleitung bzw. der Übergangswiderstand des metallischen Steuergerätegehäuses zur Fahrzeugmasse begrenzt. Der Ladestrom fließt einem Elektrolytkondensator mit typischerweise 220 bis 470 µF zu, der zur Filterung der Versorgungsspannung notwendig ist. Weiterhin ist eine Diode als Verpolschutzdiode vorgesehen. Je nach Batteriespannung und Gesamtwiderstand der eben genannten Widerstände ist der Einschaltstrom mehrere 10 A groß. Dieser Strom fließt durch den Übergangswiderstand bzw. den Widerstand der separaten Masseleitung und verursacht hier einen Spannungsabfall, so dass es zu einer Spannungsanhebung der Leiterplattenmasse gegenüber der Fahrzeugmasse kommen kann. Diese Spannungsanhebung ist im Normalfall unkritisch.

Liegt jedoch ein Kurzschluss der Minusendstufe der Zündkreisansteuerung zur Fahrzeugmasse vor, ist die Leiterplattenmasse gegenüber der Fahrzeugmasse positiv angehoben, wie es eben dargestellt wurde. Durch den Fehler bei der Minusendstufe ist so die Zündpille direkt mit der Fahrzeugmasse verbunden. Dadurch hat die Fahrzeugmasse ein negativeres Potenzial als die Leiterplattenmasse. Bei genügend großem Potenzialunterschied werden parasitäre Dioden auf den Zündkreis-IC leitend und es fließt ein Strom durch die Zündpille. Die Stromflussdauer und Stromhöhe sind unter Umständen groß genug, um eine unbeabsichtigte Zündung zu bewirken.

Liegt nun ein Kurzschluss der Plusendstufe zur Fahrzeugmasse vor, ist die Zündpille beim Anschluss an die Plusendstufe mit der Fahrzeugmasse verbunden. Auch dadurch hat die Fahrzeugmasse ein negativeres Potenzial als die Leiterplattenmasse. Bei genügend großem Potenzialunterschied werden die Dioden auf dem IC für die Zündkreisansteuerung leitend und es fließt ein Strom durch die Zündpille. Die Stromflussdauer und Stromhöhe sind unter Umständen groß genug, um eine unbeabsichtigte Zündung zu bewirken.

Liegt nun eine Unterbrechung der Verbindung zur Fahrzeugmasse vor und ein Kurzschluss der Minusendstufe zur Fahrzeugmasse oder ein Kurzschluss der Plusendstufe zur Fahrzeugmasse, dann ergibt sich folgende Situation:

Der Einschaltstrom kann nicht mehr durch die Verbindung zur Fahrzeugmasse fließen, da das Steuergerät keine Masseverbindung hat. Er fließt in diesem Fall durch die parasitären Dioden auf den Zündkreis-IC. Zudem fließt ein Strom durch die Zündpille. Die Stromflussdauer und die Stromhöhe sind in jedem Fall groß genug, um eine unbeabsichtigte Zündung zu bewirken. Das Steuergerät holt sich in diesem Falle die Masseverbindung über die Zündpille.

Erfindungsgemäß wird nun ein Steuergerät vorgeschlagen, das bei diesen Fehlern zu keiner unbeabsichtigten Zündung der Zündpille führt. Insbesondere durch die galvanische Trennung ist der Stromfluss nicht möglich, der zu einem unbeabsichtigten Zünden der Zündpille führen kann.

Die galvanische Trennung ist notwendig, um die Steuergerätespannungsversorgung vom Bordnetz zu trennen. Dies wird vorzugsweise mit einem Transformator in einem Gleichspannungswandler erreicht. Dafür ist auf der Primärseite dann eine Wechselspannungserzeugung notwendig und auf der Sekundärseite ein Gleichrichter. Zusätzlich müssen Signale der externen Peripherie, z.B. eine Diagnoseleitung oder Gurtschlossschalter oder Sensoren, die auf die Masse des Bordnetzes bezogen sind, durch sogenannte Koppelglieder an die galvanisch getrennten Komponenten im Steuergerät angeschlossen werden. Als solche Koppelglieder werden vorzugsweise Optokoppler verwendet. Diese Koppelglieder können sowohl diskret ausgeführt sein als auch in einen entsprechenden IC des Steuergeräts integriert werden.

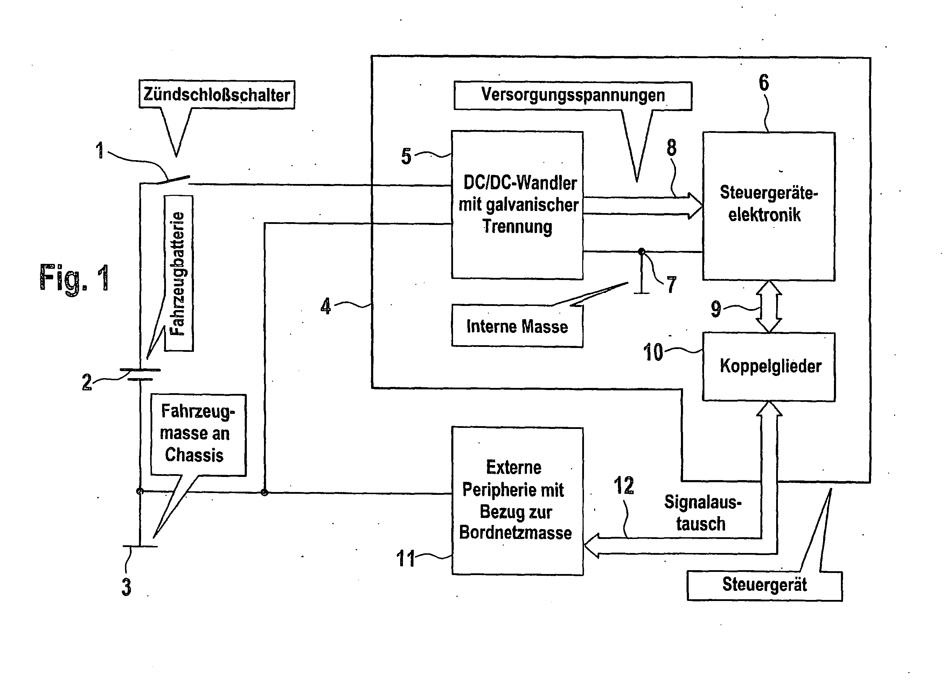

Figur 1 zeigt ein erstes Blockschaltbild der erfindungsgemäßen Vorrichtung. Ein Zündschlossschalter 1 trennt eine Fahrzeugbatterie 2, die auf der anderen Seite an Masse, und zwar an die Fahrzeugmasse, am Chassis 3 angeschlossen ist. Auf der anderen Seite ist der Zündschlossschalter 1 mit einem Wandler 5 verbunden, der sich in einem Steuergerät 4 befindet. Der Wandler 5 ist auf einer Seite mit der Fahrzeugmasse 3 verbunden und auf der anderen Seite mit einer internen Masse 7. Der Wandler 5 weist selbst eine galvanische Trennung auf, so dass die Fahrzeugmasse 3 gleichstrommäßig von der internen Masse 7 getrennt ist. Der Wandler 5 liefert Versorgungsspannungen 8 an eine Steuergeräteelektronik 6. Die Steuergeräteelektronik 6 betreibt einen Datenaustausch 9 mit Koppelgliedern 10, die sich ebenfalls in Steuergerät 4 befinden. Die Koppelglieder 10, die selbst auch eine galvanische Trennung aufweisen, da hier vorzugsweise Optokoppler verwendet werden, ist auf der anderen Seite über einen Datenein-/-ausgang 12 mit einer externen Peripherie 11 verbunden. Die externe Peripherie 11 ist ihrerseits mit der Fahrzeugmasse 3 verbunden. Unter der externen Peripherie 11 werden Sensoren und/oder Diagnoseleitungen und/oder Gurtschlossschalter verstanden.

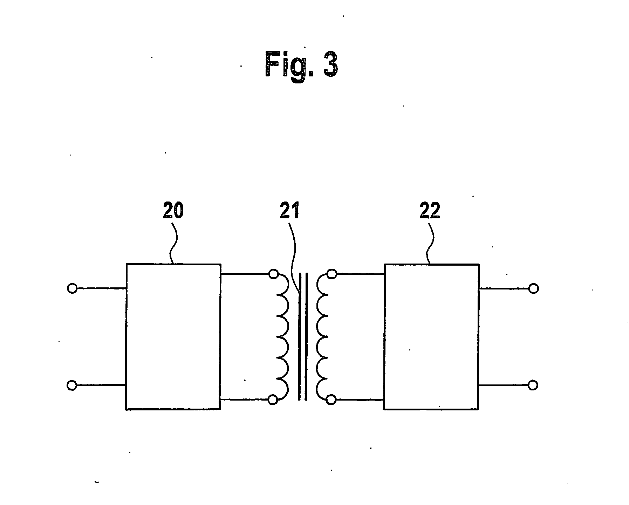

Der Wandler 5 ist hier ein Gleichspannungswandler. Dieser Gleichspannungswandler weist nun eine in Figur 3 dargestellte Konfiguration auf. Dort ist zunächst ein Gleichspannungs-/Wechselspannungswandler 20 vorgesehen, der an einen Transformator 21 angeschlossen ist. Auf der Sekundärseite des Transformators 21 ist ein Gleichrichter 22 vorgesehen. Der Gleichspannungs-/Wechselspannungswandler 20 kann hier als Oszillator ausgeführt sein oder beispielsweise auch als ein Zerhacker. Damit wird dann eine Wechselspannung erzeugt, die über den Transformator 21 übertragen werden kann. Der Gleichrichter 22 richtet dann die Wechselspannung wieder gleich, damit damit die Steuergeräteelektronik 6 versorgt werden kann. Der Gleichrichter 22 kann insbesondere als Brückengleichrichter ausgebildet sein, wobei in den Brückenzweigen Dioden geschaltet sind. Es sind jedoch auch einfachere oder alternative Gleichrichterschaltungen möglich.

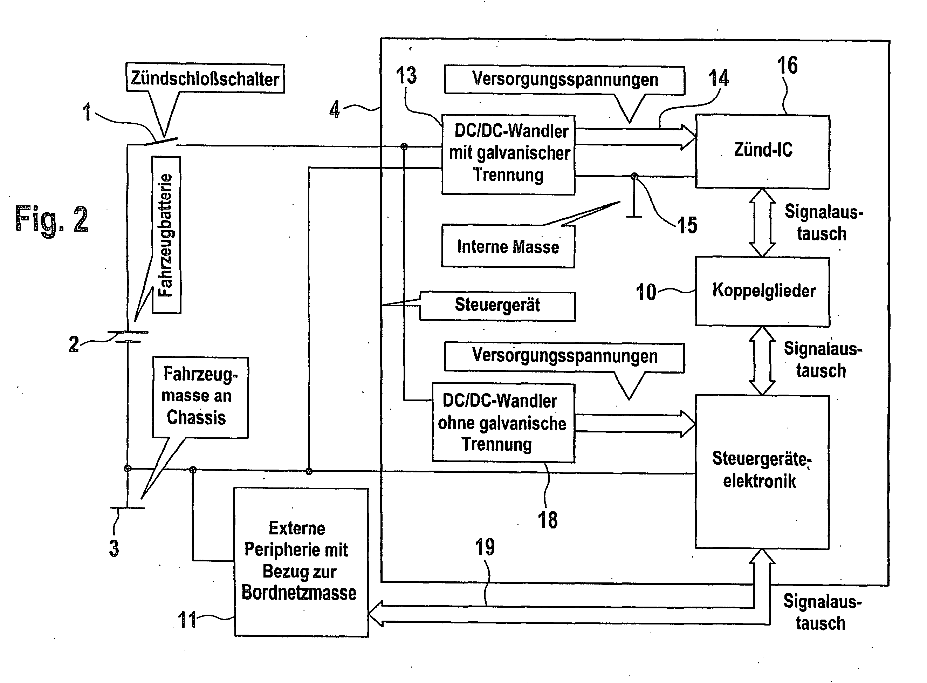

Figur 2 zeigt eine zweite Ausführung der Erfindung. Die gleichen Komponenten wie in Figur 1 sind mit den gleichen Bezugszeichen bezeichnet. Wiederum ist ein Zündschlossschalter 1 mit der Fahrzeugbatterie 2 verbunden, die wiederum mit der Fahrzeugmasse 3 verbunden ist. Auf der anderen Seite ist der Zündschlossschalter 1 mit dem Steuergerät 4 und dabei mit einem Wandler 13 mit galvanischer Trennung und einem Wandler 18 ohne galvanische Trennung verbunden. Der Wandler 13 ist so ausgeführt, wie in Figur 3 dargestellt. Auf der anderen Seite ist der Wandler 13 mit der internen Masse 15 des Steuergeräts 4 verbunden und liefert über die Leitung 14 an einen Zündkreis-IC 16 die Versorgungsspannungen. Der Zündkreis-IC 16 ist über einen Datenein-/-ausgang mit Koppelgliedern 10 verbunden, die einen Signalaustausch mit der Steuergeräteelektronik 17 durchführen. Die Steuergeräteelektronik 17 erhält vom Wandler 18 ohne galvanische Trennung die Energieversorgung, und die Steuerelektronik 17 ist weiterhin mit der Fahrzeugmasse 3 verbunden. Weiterhin ist die Steuergeräteelektronik über eine Leitung 19 mit der externen Peripherie 11 verbunden, die selbst wieder auf die Fahrzeugmasse 3 bezogen ist.

Dieses Beispiel zeigt, dass durch die erfindungsgemäße galvanische Trennung durch den Wandler auch nur einzelne sicherheitskritische Komponenten im Steuergerät getrennt werden können, während andere Komponenten an die Fahrzeugmasse angeschlossen werden bleiben können.

Es ist auch eine Trennung anderer Komponenten oder zusätzlicher Komponenten möglich, die ebenfalls im Fehlerfall zu den am Anfang der Beschreibung dargestellten fatalen Folgen führen können. Die galvanische Trennung hat jedoch, wie oben dargestellt, auch den Vorteil, dass eine Spannungswandlung möglich ist, die bestehende Herstellungsprozesse für die Komponenten des Steuergeräts weiter verwendbar macht.

Der Wandler 5 bzw. 13 kann mittels eines Energiereservekondensators als Energiespeicher auch im Fall eines Batterieabrisses, also der Energieversorgung, für eine definierte Autarkiezeit weiterbetrieben werden.

## Patentansprüche

1. Airbagsteuergerät für ein Fahrzeug, wobei das Airbagsteuergerät eine interne Masseverbindung zur Steuergeräteversorgung entweder über eine separate Masseleitung oder durch eine leitende Verbindung einer Leiterplattenmasse mit einem metallischem Steuergerätegehäuse herstellt, **dadurch gekennzeichnet, dass** ein Wandler (5, 13) mit galvanischer Trennung zur Energieversorgung von wenigstens einer Komponente (6, 16) im Steuergerät (4) angeordnet und mit der internen Masseverbindung verbunden ist, dass mit der wenigstens einen Komponente (6, 16) wenigstens ein Koppelglied (10) mit galvanischer Trennung verbindbar ist, wobei das Koppelglied (10) zur Datenübertragung dient und dass der wenigstens einen Komponente (6, 16) die Masseverbindung (7, 15) zugeordnet ist, dass der Wandler (5,13) einen Transformator (21) zur galvanischen Trennung aufweist, wobei primärseitig ein Gleichspannungs-/Wechselspannungswandler (20) und sekundärseitig ein Gleichrichter (22) vorgesehen ist, dass das wenigstens eine Koppelglied (10) als Optokoppler ausgebildet ist.

2. Steuergerät nach Anspruch 1, **dadurch gekennzeichnet, dass** der Gleichspannungs-/Wechselspannungswandler (20) einen Oszillator aufweist.

3. Steuergerät nach Anspruch 1, **dadurch gekennzeichnet, dass** der Gleichspannungs-/Wechselspannungswandler (20) einen Zerhacker aufweist.

4. Steuergerät nach einem der vorhergehenden Ansprüche, **dadurch gekennzeichnet, dass** der Wandler (5, 13) mit wenigstens einem Energiespeicher verbunden ist, der bei einem Abriss der Energieversorgung (2) den Wandler (5, 13) betreibt.

5. Steuergerät nach einem der vorhergehenden Ansprüche, **dadurch gekennzeichnet, dass** die wenigstens eine Komponente (6, 16) eine Zündkreisansteuerung für Rückhaltemittel ist.

6. Steuergerät nach einem der Ansprüche 1 bis 4, **dadurch gekennzeichnet, dass** die wenigstens eine Komponente (6, 16) die Steuergeräteelektronik ist.

## Claims

1. Airbag controller for a vehicle, wherein the airbag controller sets up an internal earth connection for supplying the controller via a separate earth line or by means of a conductive connection of a printed circuit board earth to a metallic controller housing, **characterized in that** a transformer (5, 13) with D.C. isolation is arranged in the controller (4) in order to supply power to at least one component (6, 16), and is connected to the internal earth connection, **in that** at least one coupling element (10) with D.C. isolation can be connected to the at least one component (6, 16), wherein the coupling element (10) serves to transmit data, and **in that** the at least one component (6, 16) is assigned the earth connection (7, 15), **in that** the transformer (5, 13) has a transformer element (21) for D.C. isolation, wherein a D.C. voltage/A.C. voltage transformer (20) is provided on the primary side and a rectifier (22) is provided on the secondary side, and **in that** the at least one coupling element (10) is embodied as an optocoupler.

2. Controller according to Claim 1, **characterized in that** the D.C. voltage/A.C. voltage transformer (20) has an oscillator.

3. Controller according to Claim 1, **characterized in that** the D.C. voltage/A.C. voltage transformer (20) has a chopper.

4. Controller according to one of the preceding claims, **characterized in that** the transformer (5, 13) is connected to at least one energy store which operates the transformer (5, 13) when the power supply (2) collapses.

5. Controller according to one of the preceding claims, **characterized in that** the at least one component (6, 16) is a firing circuit actuation device for restraint means.

6. Controller according to one of Claims 1 to 4, **characterized in that** the at least one component (6, 16) is the controller electronics.

## Revendications

1. Appareil de commande de coussins gonflables de véhicule selon lequel l'appareil de commande a une liaison interne de masse avec son alimentation soit par une ligne de masse distincte soit par une liaison conductrice d'une masse de plaque de circuit avec le boîtier métallique de l'appareil de commande,
**caractérisé en ce que**
un convertisseur (5, 13) à séparation galvanique assure l'alimentation en énergie d'au moins un composant (6, 16) de l'appareil de commande (4) et il est relié à la liaison de masse interne,
au moins ce composant (6, 16) est relié à au moins un élément de couplage (10) avec séparation galvanique,
l'élément de couplage (10) servant à transmettre les données et
au moins ce composant (6, 16) comporte une liaison de masse (7, 15),
le convertisseur (5, 13) comporte un transformateur (21) pour la séparation galvanique,
et côté primaire, il y a un convertisseur tension continue/tension alternative (20) et côté secondaire, un redresseur (22),
au moins l'élément de couplage (10) étant un coupleur optique.

2. Appareil de commande selon la revendication 1,
**caractérisé en ce que**
le convertisseur tension continue/tension alternative (20) comporte un oscillateur.

3. Appareil de commande selon la revendication 1,
**caractérisé en ce que**
le convertisseur tension continue/tension alternative (20) comporte un hacheur.

4. Appareil de commande selon l'une des revendications précédentes,
**caractérisé en ce que**
le convertisseur (5, 13) est relié à au moins un accumulateur d'énergie qui, en cas de rupture de l'alimentation en énergie (2), fait fonctionner le convertisseur (5, 13).

5. Appareil de commande selon l'une des revendications précédentes,
**caractérisé en ce qu'**
au moins le composant (6, 16) est une commande de circuit d'allumage d'un moyen de retenue.

6. Appareil de commande selon l'une des revendications 1 à 4,
**caractérisé en ce qu'**
au moins un composant (6, 16) est l'électronique de l'appareil de commande.
